(19) Europäisches Patentamt
European Patent Office
Office européen des brevets

(11) EP 4 625 326 A1

(12) EUROPEAN PATENT APPLICATION
published in accordance with Art. 153(4) EPC

(43) Date of publication:
01.10.2025 Bulletin 2025/40

(51) International Patent Classification (IPC):
*G06T 9/00* (2006.01)

(21) Application number: 24818366.7

(22) Date of filing: 11.04.2024

(86) International application number:
PCT/CN2024/087137

(87) International publication number:
WO 2024/250829 (12.12.2024 Gazette 2024/50)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 08.06.2023 CN 202310674427

(71) Applicant: Tencent Technology (Shenzhen)
Company Limited
Shenzhen, Guangdong 518057 (CN)

(72) Inventor: CAI, De
Shenzhen, Guangdong 518057 (CN)

(74) Representative: Nederlandsch Octrooibureau
P.O. Box 29720
2502 LS The Hague (NL)

(54) **IMAGE PROCESSING METHOD AND APPARATUS, DEVICE, STORAGE MEDIUM, AND PROGRAM PRODUCT**

(57) An image processing method and apparatus, an electronic device, a computer-readable storage medium, and a computer program product, relating to artificial intelligence technology. The method comprises: performing feature extraction on a compressed image to obtain a compressed feature map of the compressed image; performing reconstruction on the compressed feature map to obtain a reconstructed feature map of the compressed image; performing compression coefficient prediction on the compressed feature map to obtain the compression coefficient of the compressed image; and on the basis of the compression coefficient, performing denoising on the reconstructed feature map to obtain a denoised compressed image, wherein the denoised compressed image is the compressed image that has undergone compression denoising.

Perform feature extraction on a compressed image, to obtain a compression feature map of the compressed image — 101

Perform reconstruction on the compression feature map, to obtain a reconstruction feature map of the compressed image — 102

Perform QF prediction on the compression feature map, to obtain a QF of the compressed image — 103

Perform denoising on the reconstruction feature map based on the QF, to obtain a denoised compressed image — 104

FIG. 3A

EP 4 625 326 A1

**Description**

RELATED APPLICATION

Embodiments of this application are proposed based on Chinese Patent Application No. 202310674427.9 filed on June 8, 2023, and claim priority to the Chinese Patent Application.

FIELD OF THE TECHNOLOGY

The present disclosure relates to artificial intelligence (AI) technologies, and in particular, to an image processing method and apparatus, an electronic device, a computer-readable storage medium, and a computer program product.

BACKGROUND OF THE DISCLOSURE

Artificial intelligence (AI) is a computer science-related technology, which include the study of the design principles and implementation methods of various intelligent machines, to enable the machines to have functions of sensing, reasoning, and decision-making. AI technology is a comprehensive discipline that covers a wide range of fields, such as natural language processing technology, machine learning and deep learning. With the development of these technologies, AI technology is increasingly applied to more fields and plays an increasingly important role.

Image processing is one of the important applications in AI technology. With the continuous development of video technology, people have an increasingly high requirement for video quality. However, transmission, storage, and processing costs of high-resolution videos may be significant, which limits the development of video applications. Therefore, video compression technologies have emerged to help reducing storage and transmission costs of video data. However, a compressed video often results in a significant reduction in image quality.

SUMMARY

Embodiments of the present disclosure provide an image processing method and apparatus, an electronic device, a computer-readable storage medium, and a computer program product, which can effectively remove compression noise in a compressed image to improve image quality.

Technical solutions in the embodiments of the present disclosure are implemented as follows.

An embodiment of the present disclosure provides an image processing method, applied to an electronic device, including:

obtaining a feature map of a compressed image;

reconstructing the feature map of the compressed image;

performing denoising on the reconstructed feature map based on a quality factor, QF, of the compressed image to obtain a denoised compressed image, wherein the QF of the compressed image is predicted based on the feature map.

An embodiment of the present disclosure provides an image processing apparatus, including:

an extraction module, configured to obtain a feature map of a compressed image;

a reconstruction module, configured to reconstruct the feature map of the compressed image;

a denoising module, configured to perform denoising on the reconstructed feature map based on a quality factor, QF, of the compressed image to obtain a denoised compressed image, wherein the QF of the compressed image is predicted based on the feature map.

An embodiment of the present disclosure provides an electronic device for image processing, the electronic device including:

a memory, configured to store a computer program or a computer-executable instruction; and

a processor, configured to perform the image processing method provided in the embodiments of the present disclosure when executing the computer program or the computer-executable instruction stored in the memory.

An embodiment of the present disclosure provides a computer-readable storage medium, having a computer program or a computer-executable instruction stored therein, the computer program or the computer-executable instruction, when executed by a processor, implementing the image processing method provided in the embodiments of the present disclosure.

An embodiment of the present disclosure provides a computer program product, including a computer program or a computer-executable instruction, the computer program or the computer-executable instruction, when executed by a processor, implementing the image processing method provided in the embodiments of the present disclosure.

The embodiments of the present disclosure have the following beneficial effects.

Prediction is performed on the feature map of the compressed image, to obtain a QF of the compressed image, and denoising is performed on the reconstructed feature map of the compressed image based on the QF. Since different QFs correspond to different compression noise, compression noise in the compressed image can be dynamically and effectively removed based on the QF, thereby improving image quality.

BRIEF DESCRIPTION OF THE DRAWINGS

FIG. 1 is a schematic diagram of an application scenario of an image processing system according to an embodiment of the present disclosure.

FIG. 2 is a schematic structural diagram of an electronic device for image processing according to an embodiment of the present disclosure.

FIG. 3A is a first schematic flowchart of an image processing method according to an embodiment of the present disclosure.

FIG. 3B is a second schematic flowchart of an image processing method according to an embodiment of the present disclosure.

FIG. 3C is a third schematic flowchart of an image processing method according to an embodiment of the present disclosure.

FIG. 3D is a fourth schematic flowchart of an image processing method according to an embodiment of the present disclosure.

FIG. 3E is a fifth schematic flowchart of an image processing method according to an embodiment of the present disclosure.

FIG. 3F is a sixth schematic flowchart of an image processing method according to an embodiment of the present disclosure.

FIG. 3G is a schematic structural diagram of a reconstruction network according to an embodiment of the present disclosure.

FIG. 3H is a schematic diagram of a denoising process according to an embodiment of the present disclosure.

FIG. 4 is a seventh schematic flowchart of an image processing method according to an embodiment of the present disclosure.

FIG. 5 is a schematic structural diagram of a dynamic denoising network according to an embodiment of the present disclosure.

FIG. 6 is a schematic flowchart of a super-resolution algorithm according to an embodiment of the present disclosure.

FIG. 7 is a schematic flowchart of video compression according to an embodiment of the present disclosure.

FIG. 8 is a schematic flowchart of an image processing method according to an embodiment of the present disclosure.

DESCRIPTION OF EMBODIMENTS

To make the objectives, technical solutions, and advantages of the present disclosure clearer, the following describes the present disclosure in further detail with reference to the accompanying drawings. The described embodiments are not to be considered as a limitation on the present disclosure. All other embodiments obtained by a person of ordinary skill in the art without creative efforts fall within the protection scope of the present disclosure.

In the following description, a term "first/second" involved is merely used for distinguishing between similar objects and does not represent a specific order of objects. "First/second" may be transposed for a specific order or a sequence when allowed, so that the embodiments of the present disclosure described herein can be implemented in an order other than those illustrated or described herein.

In the following description, the involved expression "some embodiments" describes subsets of all possible embodiments, but the expression "some embodiments" may be the same subset or different subsets of all the possible embodiments, and may be combined with each other without conflict.

Unless otherwise defined, meanings of all technical and scientific terms used in this specification are the same as those usually understood by a person skilled in the art to which the present disclosure belongs. The terms used in this specification are merely intended to describe objectives of the embodiments of the present disclosure, and are not intended to limit the present disclosure.

Before the embodiments of the present disclosure are further described in detail, a description is made on nouns and terms in the embodiments of the present disclosure, and the nouns and terms in the embodiments of the present disclosure are applicable to the following explanations.

1) Downsampling: An image is downscaled to enable the image to fit a fixed size, and a resolution of the image is reduced. For an image I with a size of M*N, downsampling is performed on the image I by a factor of s, to obtain a resolution image with a size of (M/s)*(N/s), where s is a common divisor of M and N. For example, for an image in a matrix form, an image in an s*s window of an original image is converted into a pixel, and a value of the pixel is a mean value of all pixels in the s*s window.

2) Upsampling: An image is upscaled to enable the image to fit a fixed size, and a resolution of the image is increased. For image upscaling, an interpolation method may be adopted. To be specific, based on original image pixels, a new pixel is inserted between pixel points through an appropriate interpolation algorithm.

3) Quality factor (QF): The QF in image compression refers to a compression ratio, which represents a ratio of a size of an original image to a size of a compressed image. The size of the original image is a size of an uncompressed image file, and the size of the compressed image is a size of an image file obtained through compression algorithm processing. In digital image processing, a QF is one of important indicators for measuring compression efficiency. A larger QF indicates a better compression effect. To be specific, a size of an image file is significantly reduced through a compression algorithm. For example, the QF is between 1 and 100, and a larger value indicates a better compression effect. However, a larger QF is more likely to cause image distortion or loss of some details. Therefore, a relationship between a compression effect and image quality needs to be weighed in practical application.

4) Modulation factor: The modulation factor is a parameter for measuring image quality, which may be configured during image compression for describing a change in a degree of distortion of an image before and after compression. During the image compression, the modulation factor represents a relative relationship between quality of a compressed image and quality of an original image. Through a change in the modulation factor, a balance between the quality of the compressed image and a compression rate may be adjusted, so as to obtain a compressed image that better meets a requirement. A value range of the modulation factor may be between 0 and 1, where 1 represents quality of an original image, and 0 represents a completely distorted image. In different compression algorithms, the modulation factor may be calculated through different methods, but objectives of the compression algorithms are to minimize data loss during compression while ensuring the image quality.

Embodiments of the present disclosure provide an image processing method and apparatus, an electronic device, a computer-readable storage medium, and a computer program product, which can effectively remove compression noise in a compressed image to improve image quality.

The image processing method provided in the embodiments of the present disclosure may be implemented by a terminal/server alone, or may be implemented collaboratively by a terminal and a server. For example, the terminal independently performs the image processing method described below, or the terminal transmits an image processing request to the server, and the server performs the image processing method based on the received image processing request.

An electronic device for image processing provided in the embodiments of the present disclosure may be various types of terminal devices or servers. The server may be an independent physical server, or may be a server cluster formed by a plurality of physical servers or a distributed system, and may further be a cloud server providing basic cloud computing services such as cloud service, a cloud database, cloud computing, a cloud function, cloud storage, a network service, cloud communication, a middleware service, a domain name service, a security service, a content delivery network (CDN), a big data and artificial intelligence (AI) platform. The terminal may be a notebook computer, a tablet computer, a desktop computer, a set-top box, a mobile device (for example, a mobile phone, a portable music player, a personal digital assistant, a dedicated message device, a portable game device, an on-board device), a smart phone, a smart speaker, a smart watch, a smart TV, an on-board terminal, and other various types of user terminals, but is not limited thereto. The terminal and the server may be directly or indirectly connected through wired or wireless communication, which is not limited herein in the present disclosure.

The server is used as an example. For example, the server may be a server cluster deployed in the cloud, and opens AI as a Service (AIaaS) to users. An AIaaS platform splits several common AI services, and provides an independent or packaged service on the cloud. Such a service mode is similar to that of an AI theme mall. All users may access, through an application programming interface, and use one or more AI services provided by using the AIaaS platform.

For example, one of the AI cloud services may be an image processing service, i.e., a cloud server is encapsulated with an image processing program provided in the embodiments of the present disclosure. A user calls an image processing service in a cloud service through a terminal (having a client such as a video client run thereon), so that a server deployed on the cloud calls an encapsulated image processing program to: perform feature extraction on a compressed image, to obtain a feature map (which is also referred to as a compression feature map hereinafter) of the compressed image; perform reconstruction on the compression feature map to obtain a reconstructed feature map of the compressed image; perform QF prediction on the compression feature map to obtain a QF of the compressed image; and perform denoising on the reconstructed feature map based on the QF, to obtain a denoised compressed image, so as to effectively remove compression noise in the compressed image and improve image quality.

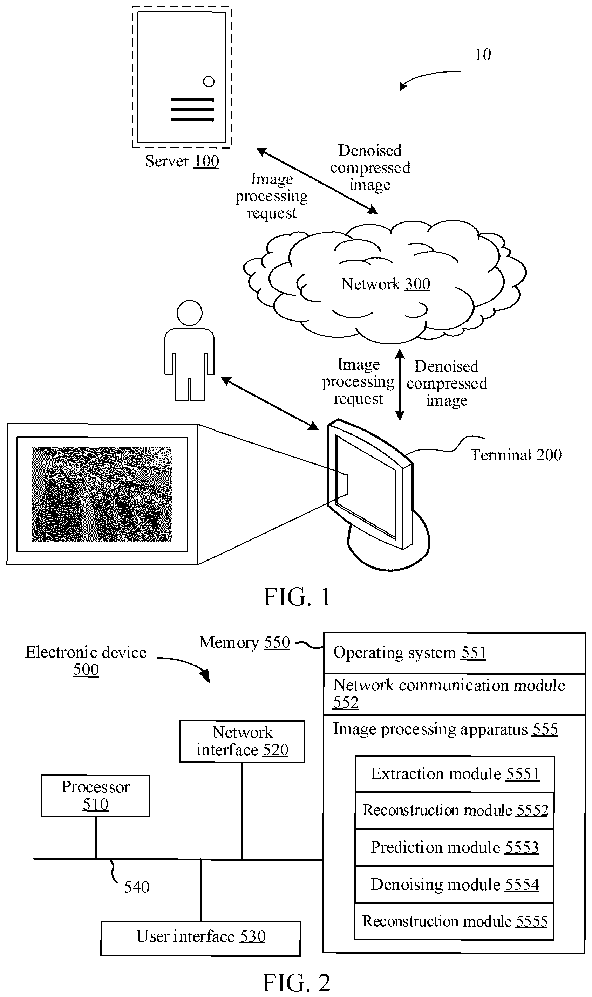

FIG. 1 is a schematic diagram of an application scenario of an image processing system 10 according to an embodiment of the present disclosure. A terminal 200 is connected to a server 100 through a network 300. The network 300 may be a wide area network, a local area network, or a combination thereof.

The terminal 200 (having a client run thereon, for example, a call client or a video client) may be configured to obtain an image processing request. For example, a user opens a video client through the terminal, and the terminal automatically obtains an image processing request (including any compressed image in a video).

In some embodiments, an image processing plug-in may be implanted in the client running in the terminal, which is configured to implement the image processing method locally on the client. For example, the terminal 200 calls the image processing plug-in to implement the image processing method, and performs feature extraction on a compressed image, to obtain a compression feature map of the compressed image; performs reconstruction on the compression feature map to obtain a reconstructed feature map of the compressed image; performs QF prediction on the compression feature map to obtain a QF of the compressed image; and performs denoising on the reconstructed feature map based on the QF, to obtain a denoised compressed image, so as to effectively remove compression noise in the compressed image and improve image quality.

In an example, for a video application, a client obtains any compressed image in a video, dynamically determines a QF through an image processing method, and denoises all compressed images in the video through the QF, thereby obtaining a denoised compressed image with the same quality as possible, to obtain a high-quality video and improve viewing experience of the user.

In some embodiments, after obtaining the image processing request, the terminal 200 calls an image processing interface (which may be provided in a cloud service form, i.e., an image processing service) of the server 100, and the server 100 performs feature extraction on a compressed image, to obtain a compression feature map of the compressed image; performs reconstruction on the compression feature map to obtain a reconstructed feature map of the compressed image; performs QF prediction on the compression feature map to obtain a QF of the compressed image; and performs denoising on the reconstructed feature map based on the QF, to obtain a denoised compressed image, and transmits the denoised compressed image to the terminal 200 to respond to the image processing request, so as to effectively remove compression noise in the compressed image and improve image quality.

In an example, for an instant messaging application, after a user receives a compressed image transmitted by a friend, the server 100 dynamically determines a QF through an image processing method, and denoises all compressed images in a video through the QF, thereby obtaining a high-quality denoised compressed image and improve user experience.

In some embodiments, the terminal or the server may implement the image processing method provided in the embodiments of the present disclosure by running various computer-executable instructions or computer programs. For example, the computer-executable instructions may be microprogram-level commands, machine instructions, or software instructions. The computer program may be a native program or a software module in an operating system, may be a native application (APP), i.e., a program that needs to be installed in the operating system to run, such as a video application or an instant messaging application, or may be a mini program that can be embedded into any APP, i.e. a program that only needs to be downloaded into a browser environment to run. In conclusion, the foregoing computer-executable instruction may be an instruction in any form, and the foregoing computer program may be an APP, a module, or a plug-in in any form.

In some embodiments, a plurality of servers may form a block chain. The server 100 is a node on the block chain, an information connection may exist between nodes in the blockchain, and information transmission may be performed between the nodes through the foregoing information connection. Data (for example, logic of image processing and the denoised compressed image) related to the image processing method provided in the embodiments of the present disclosure may be stored in the blockchain.

A structure of the electronic device for image processing provided in the embodiments of the present disclosure is described below. FIG. 2 is a schematic structural diagram of an electronic device 500 for image processing according to an embodiment of the present disclosure. An example in which the electronic device 500 is a terminal is used for description. The electronic device 500 for image processing shown in FIG. 2 includes at least one processor 510, a memory 550, at least one network interface 520, and a user interface 530. Various components in the electronic device 500 are coupled together through a bus system 540. The bus system 540 is configured to implement connection and communication between the components. In addition to a data bus, the bus system 540 further includes a power bus, a control bus, and a status signal bus. However, for clarity, various buses are marked as the bus system 540 in FIG. 2.

The processor 510 may be an integrated circuit chip with a signal processing capability, for example, a general-purpose processor, a digital signal processor (DSP), another programmable logic device, a discrete gate or a transistor logic device, or a discrete hardware component. The general-purpose processor may be a microprocessor, any conventional processor, or the like.

The memory 550 includes a volatile memory or a non-volatile memory, or may include both the volatile memory and the non-volatile memory. The non-volatile memory may be a read-only memory (ROM). The volatile memory may be a random access memory (RAM). The memory 550 described in this embodiment of the present disclosure is intended to include any suitable type of memory. In some embodiments, the memory 550 includes one or more storage devices that are physically located away from the processor 510.

In some embodiments, the memory 550 can store data to support various operations. Examples of the data include a program, a module, and a data structure or a subset or a superset thereof. An exemplary description is given below.

An operating system 551 includes system programs configured to process various basic system services and perform hardware-related tasks, for example, a framework layer, a core library layer, and a driver layer, which are configured for implementing various basic services and process hardware-based tasks.

A network communication module 552 is configured to arrive at another electronic device through one or more (wired or wireless) network interfaces 520. Exemplary network interfaces 520 include a bluetooth interface, a wireless compatibility authentication (Wi-Fi) interface, a universal serial bus (USB) interface, and the like.

In some embodiments, the image processing apparatus provided in the embodiments of the present disclosure may be implemented through software. The image processing apparatus provided in the embodiments of the present disclosure may be provided as various software embodiments, including various forms such as an application program, software, a software module, a script, or code.

FIG. 2 shows an image processing apparatus 555 stored in a memory 550, which may be software in a form of a program, a plug-in, and the like, and includes a series of modules, including an extraction module 5551, a reconstruction module 5552, a prediction module 5553, a denoising module 5554, and a reconstruction module 5555. The modules are logical modules, and therefore may be arbitrarily combined or further split based on a function to be performed. A function of each module is to be described below.

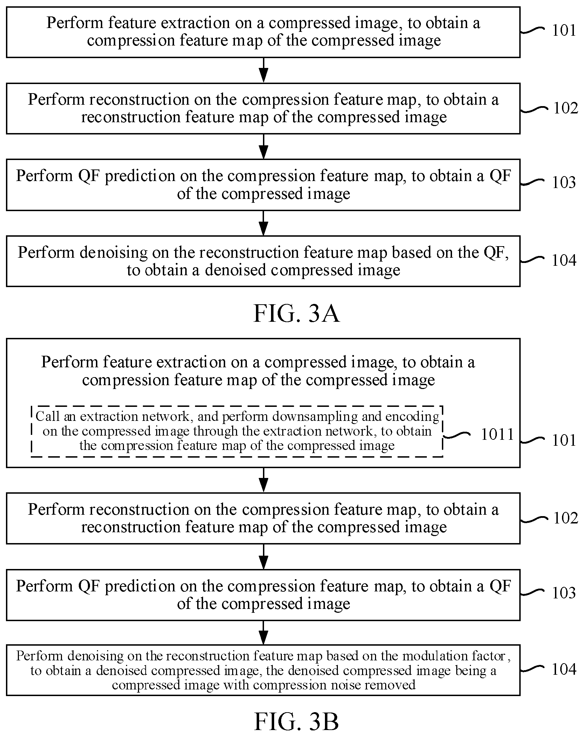

As described above, the image processing method provided in the embodiments of the present disclosure may be implemented by various types of electronic devices, for example, a terminal, a server, or a combination thereof. Therefore, an execution subject of each operation is not repeatedly described below. FIG. 3A is a first schematic flowchart of an image processing method according to an embodiment of the present disclosure. A description is provided based on operations shown in FIG. 3A.

In the following operations, a compressed image is an image compressed through a compression algorithm. Since different QFs produce different compression noise, images compressed through different QFs may introduce compression noise of different degrees, resulting in different quality of the compressed image. The compressed image may be an image frame in a video or an image sequence.

Operation 101: Perform feature extraction on a compressed image to obtain a compression feature map of the compressed image. The feature extraction is to obtain a feature map of the compressed image.

The compression feature map is a feature map related to a QF and is also referred to as the feature map, and a representation form of the feature map may be a matrix, a vector, or the like.

FIG. 3B is a second schematic flowchart of an image processing method according to an embodiment of the present disclosure. FIG. 3B shows that operation 101 in FIG. 3A may be implemented through operation 1011. In operation 1011, an extraction network is called, and downsampling and encoding are performed on the compressed image through the extraction network, to obtain a compression feature map of the compressed image. The downsampling and encoding is to downsample and encode the compressed image.

Herein, the downsampling and encoding are performed on the compressed image through an AI technology, to extract the compression feature map from the compressed image through the downsampling and encoding. This embodiment of the present disclosure is not limited to a structural form of the extraction network. For example, the extraction network may be a deep neural network (NN) or a convolutional neural network. For example, downsampling and encoding are implemented by downsampling an image through an extraction network, to downsample image data (a compressed image) into a feature vector (a compressed image map).

In some embodiments, the extraction network includes a plurality of cascaded encoding layers. Operation 1011 may be implemented in the following manners: performing downsampling and encoding on the compressed image through a first encoding layer of the plurality of cascaded encoding layers; outputting an encoding result of the first encoding layer to a subsequent cascaded encoding layer, and further performing the downsampling and encoding and the outputting of the encoding result through the subsequent cascaded encoding layer until a last encoding layer; and using an encoding result outputted by the last encoding layer as the compression feature map of the compressed image.

Herein, features are extracted layer by layer (i.e., cascaded downsampling and encoding) by extracting cascaded encoding layers in a network, to extract precise features related to a QF, so that accurate prediction can be performed subsequently based on a precise compression feature map.

In some embodiments, each encoding layer includes a plurality of cascaded convolutional layers and a downsampling layer. The downsampling and encoding performed on the compressed image through the first encoding layer of the plurality of cascaded encoding layers may be implemented in the following manners: performing cascaded convolution on the compressed image through the plurality of cascaded convolutional layers included in the first encoding layer, to obtain a convolution feature map of the compressed image; and performing downsampling on the convolution feature map of the compressed image through a downsampling layer included in the first encoding layer, to obtain an encoding result of the first encoding layer. A cascading manner of the plurality of cascaded encoding layers is similar to a cascading manner of the encoding layer. The cascaded convolution is to successively performing convolution through the plurality of cascaded convolutional layers

In some embodiments, the further performing the downsampling and encoding and the outputting of the encoding result through the subsequent cascaded encoding layer may be implemented in the following manners: performing cascaded convolution on an encoding result outputted by an $(i-1)^{th}$ encoding layer through a plurality of cascaded convolutional layers included in an $i^{th}$ encoding layer, to obtain a convolution feature map of the $i^{th}$ encoding layer; and performing downsampling on the convolution feature map of the $i^{th}$ encoding layer through a downsampling layer included in the $i^{th}$ encoding layer, to obtain an encoding result of the $i^{th}$ encoding layer, and outputting the encoding result of the $i^{th}$ encoding layer to an $(i+1)^{th}$ encoding layer, i being an increasing positive integer, $1 < i < N$, and N being a total quantity of encoding layers. A cascading manner of the plurality of cascaded encoding layers is similar to a cascading manner of the encoding layer.

In some embodiments, performing downsampling and encoding through the last encoding layer may be implemented in the following manners: performing cascaded convolution on an encoding result outputted by an $(N-1)^{th}$ encoding layer through a plurality of cascaded convolutional layers included in the last encoding layer, to obtain a convolution feature map of the last encoding layer; performing downsampling on the convolution feature map of the last encoding layer through a downsampling layer included in the last encoding layer, to obtain an encoding result of the last encoding layer; and using an encoding result outputted by the last encoding layer as the compression feature map of the compressed image. A cascading manner of the plurality of cascaded encoding layers is similar to a cascading manner of the encoding layer.

In the field of image processing, convolution is a basic technology for image processing. A convolution operation is a special mathematical operation that involves "sliding" one function over another (an input) and "integrating" their product to generate a new function (i.e., an output). The convolution may be configured for identifying a mode or a feature in an image. The extraction network that is an NN performs a convolution operation on a specific region (also referred to as a "convolution kernel") of an image, to extract a feature of the image. The features may include an edge, texture, a color, and the like. Downsampling is also a basic technology for image processing, which is also referred to as spatial downsampling or skip connections, and refers to a reduction in a spatial size of an input while maintaining a feature pyramid structure. In the extraction network that is an NN, downsampling may involve performing a repetition or permutation operation on a matrix, so that a size of the matrix is smaller. This process allows a model to focus on local features rather than complete global information. In addition, downsampling can further enhance the parallel processing capability of the model and improve calculation efficiency.

In the embodiments of the present disclosure, two processes including convolution and downsampling are used together to extract a compression feature map of a compressed image. The convolution operation is configured for extracting a feature, and the downsampling is configured for reducing a spatial size of an image, thereby allowing the model to process a larger amount of input data. Such combination allows the model to capture local and global information of a compressed image while maintaining a processing speed and efficiency.

Operation 102: Perform reconstruction on the compression feature map to obtain a reconstructed feature map of the compressed image.

The reconstruction on the compression feature map is to reconstruct the feature map of the compressed image. The reconstructed feature map is a to-be-denoised feature map reconstructed based on the compressed image, and a representation form of the feature map may be a matrix, a vector, or the like.

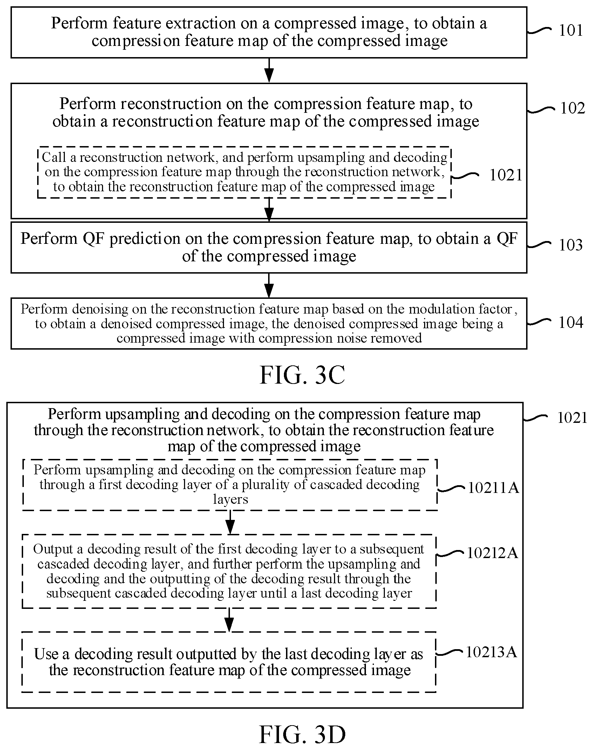

FIG. 3C is a third schematic flowchart of an image processing method according to an embodiment of the present disclosure. FIG. 3C shows that operation 102 in FIG. 3A may be implemented through operation 1021. In operation 1021, a reconstruction network is called, and upsampling and decoding are performed on the compression feature map through the reconstruction network, to obtain a reconstructed feature map of the compressed image.

Herein, upsampling and decoding are performed on the compression feature map through an AI technology, to reconstruct the feature map through upsampling and decoding. The upsampling and decoding is to upsample and decode the compression feature map. This embodiment of the present disclosure is not limited to a structural form of the reconstruction network. For example, the reconstruction network may be a deep NN or a convolutional NN. The upsampling and decoding are implemented by upsampling the feature map through the reconstruction network, to increase a resolution of the feature map.

FIG. 3D is a fourth schematic flowchart of an image processing method according to an embodiment of the present disclosure. FIG. 3D shows that operation 1021 in FIG. 3C may be implemented through operation 10211A to operation 10213A. The reconstruction network includes a plurality of cascaded decoding layers. In operation 10211A, upsampling and decoding are performed on the compression feature map through a first decoding layer of the plurality of cascaded decoding layers. In operation 10212A, a decoding result of the first decoding layer is outputted to a subsequent cascaded decoding layer, and the upsampling and decoding are further performed and the decoding result is outputted through the subsequent cascaded decoding layer until a last decoding layer. In operation 10213A, a decoding result outputted by the last decoding layer is used as the reconstructed feature map of the compressed image.

Herein, reconstruction and restoration (i.e., cascaded upsampling and decoding) are performed layer by layer through the cascaded decoding layers in the reconstruction network, to restore the same features as those of the compressed image as much as possible, so that accurate modulation can be performed subsequently based on a precise QF.

In some embodiments, each decoding layer includes a plurality of cascaded convolutional layers and an upsampling layer. Operation 10211A may be implemented in the following manners: performing cascaded convolution on the compression feature map through the plurality of cascaded convolutional layers included in the first decoding layer, to obtain a convolution feature map of the compression feature map; and performing upsampling on the convolution feature map through an upsampling layer included in the first decoding layer, to obtain a decoding result of the first decoding layer. A cascading manner of the plurality of cascaded decoding layers is similar to a cascading manner of the decoding layer.

In some embodiments, each decoding layer includes a plurality of cascaded convolutional layers and an upsampling layer. Operation 10212A may be implemented in the following manners: outputting the decoding result of the first decoding layer to a subsequent cascaded decoding layer, and performing cascaded convolution on a decoding result outputted by a $(j-1)^{th}$ decoding layer through a plurality of cascaded convolutional layers included in a $j^{th}$ decoding layer, to obtain a convolution feature map of the $j^{th}$ decoding layer; and performing upsampling on the convolution feature map of the $j^{th}$ decoding layer through an upsampling layer included in the $j^{th}$ decoding layer, to obtain a decoding result of the $j^{th}$ decoding layer, and outputting the decoding result of the $j^{th}$ decoding layer to a $(j+1)^{th}$ decoding layer, j being an increasing positive integer, $1 < j < M$, and M being a total quantity of decoding layers. A cascading manner of the plurality of cascaded decoding layers is similar to a cascading manner of the decoding layer.

In some embodiments, each decoding layer includes a plurality of cascaded convolutional layers and an upsampling layer. Operation 10213A may be implemented in the following manners: performing cascaded convolution on a decoding result outputted by an $(M-1)^{th}$ decoding layer through a plurality of cascaded convolutional layers included in the last decoding layer, to obtain a convolution feature map of the last decoding layer; and performing upsampling on the convolution feature map of the last decoding layer through an upsampling layer included in the last decoding layer, to obtain a decoding result of the last decoding layer, and using the decoding result outputted by the last decoding layer as the reconstructed feature map of the compressed image. A cascading manner of the plurality of cascaded decoding layers is similar to a cascading manner of the decoding layer.

In the field of image processing, convolution and upsampling in an NN play a key role in constructing the reconstruction network. The convolution is the core of the reconstruction network, which performs local calculation on an input image through a filter (also referred to as a convolution kernel), to extract a local feature of the image. The convolution kernel slides on the image (also referred to as scanning), and a feature map is generated through each calculation. These feature maps represent abstract features of different levels in an image, ranging from raw pixels to more complex shapes and textures. The convolution operation helps a model automatically learn a capability of extracting important features from an input image. Upsampling is another important operation in the reconstruction network, which is configured for increasing a spatial dimension, i.e., increasing a height and a width of an image. This is contrary to the downsampling. The downsampling is to reduce the spatial dimension. The upsampling may be implemented in a plurality of manners, for example, transposed convolution. The transposed convolution enables a size of the output image to be larger than that of the input image through a special convolution kernel. This operation is used in the NN to restore an image size, maintain spatial information during feature fusion, and reconstruct image details during image generation.

The upsampling in the embodiments of the present disclosure helps restore details in a deeper layer of a network, which is very useful in some complex image reconstruction tasks. Convolution and upsampling in the reconstruction network play an important role in extracting and reconstructing features in the NN for image processing. Through these operations, a network can learn complex feature representation from an original image, to accurately reconstruct image details.

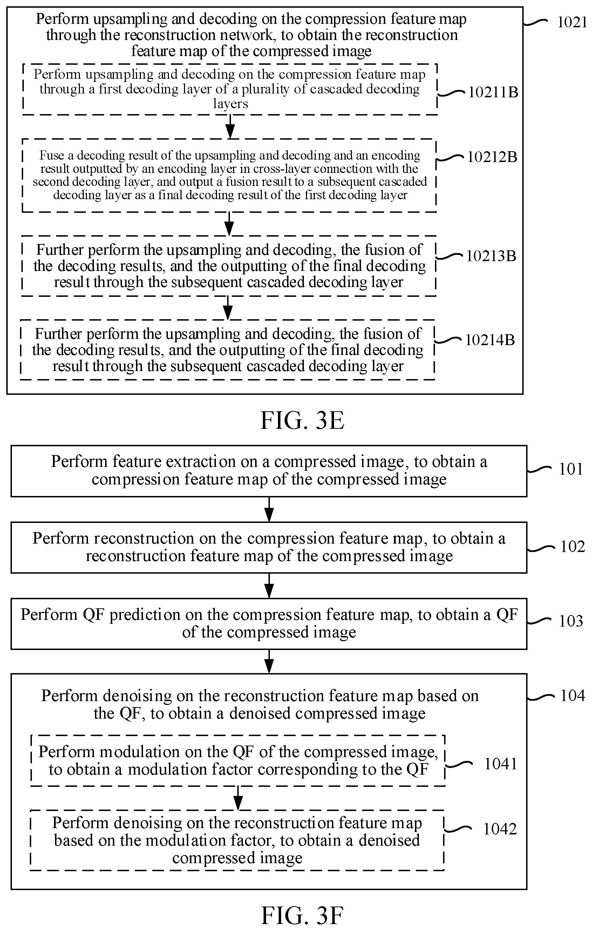

FIG. 3E is a fifth schematic flowchart of an image processing method according to an embodiment of the present disclosure. FIG. 3E shows that operation 1021 in FIG. 3C may be implemented through operation 10211B to operation 10213B. When the extraction network includes the plurality of cascaded encoding layers, the reconstruction network includes the plurality of cascaded decoding layers, and a connection (which is also referred to as a cross-layer connection) exists between the encoding layers and the decoding layers. In operation 10211B, upsampling and decoding are performed on the compression feature map through a first decoding layer of the plurality of cascaded decoding layers. In operation 10212B, a decoding result of the upsampling and decoding and an encoding result outputted by an encoding layer in cross-layer connection with the second decoding layer are fused, and a fusion result is outputted to a subsequent cascaded decoding layer as a final decoding result of the first decoding layer. In operation 10213B, the upsampling and decoding, the fusion of the decoding results, and the outputting of the final decoding result are further performed through the subsequent cascaded decoding layer. In operation 10214B, a decoding result outputted by the last decoding layer is used as the reconstructed feature map of the compressed image.

Herein, outputs of the encoding layers with cross-layer connections (i.e., skip connections) are fused through the cascaded decoding layers in the reconstruction network, and reconstructed and restored layer by layer, to restore the same features as those of the compressed image as much as possible, so that accurate modulation can be performed subsequently based on a precise QF.

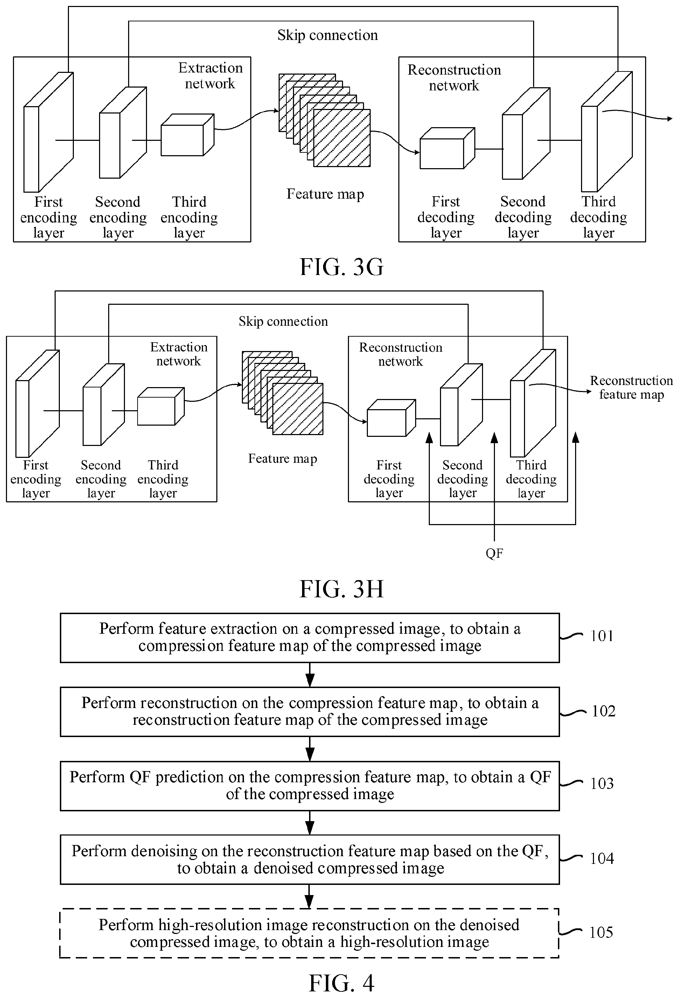

As shown in FIG. 3G, the extraction network includes three cascaded encoding layers, and the reconstruction network includes three cascaded decoding layers. A connection (a cross-layer connection) exists between a first encoding layer and a third decoding layer, and a connection (a cross-layer connection) exists between the second encoding layer and the second decoding layer. Upsampling and decoding are performed on the compression feature map through the first decoding layer to obtain a decoding result of the first decoding layer. The decoding result of the upsampling and decoding and the encoding result outputted by the second encoding layer in cross-layer connection with the second decoding layer are fused, and a fusion result is outputted to the second decoding layer as a final decoding result of the first decoding layer. Upsampling and decoding are performed on the final decoding result of the first decoding layer through the second decoding layer, to obtain a decoding result of the second decoding layer, the decoding result of the upsampling and decoding and an encoding result outputted by the first encoding layer in cross-layer connection with the third decoding layer are fused, and a fusion result is outputted to the third decoding layer as a final decoding result of the second decoding layer. Upsampling and decoding are performed on a final decoding result of the second decoding layer through the second decoding layer, and the decoding result of the upsampling and decoding is used as the reconstructed feature map of the compressed image.

In some embodiments, each decoding layer includes a plurality of cascaded convolutional layers and an upsampling layer. Operation 10211B may be implemented in the following manners: performing cascaded convolution on the compression feature map through the plurality of cascaded convolutional layers included in the first decoding layer, to obtain a convolution feature map of the compression feature map; and performing upsampling on the convolution feature map through an upsampling layer included in the first decoding layer, to obtain a decoding result of the first decoding layer.

In some embodiments, operation 10212B may be implemented in the following manner: performing element-by-element addition on the decoding result of the upsampling and decoding and an encoding result outputted by an encoding layer in cross-layer connection with the second decoding layer, and outputting an addition result to a subsequent cascaded decoding layer as a final decoding result of the first decoding layer; or concatenating the decoding result of the upsampling and decoding and an encoding result outputted by an encoding layer in cross-layer connection with the second decoding layer, and outputting a concatenation result to a subsequent cascaded decoding layer as a final decoding result of the first decoding layer.

In some embodiments, each decoding layer includes a plurality of cascaded convolutional layers and an upsampling layer. Operation 10213B may be implemented in the following manners: performing cascaded convolution on a final decoding result outputted by a $(j-1)^{th}$ decoding layer through a plurality of cascaded convolutional layers included in a $j^{th}$ decoding layer, to obtain a convolution feature map; and performing upsampling on the convolution feature map through an upsampling layer included in the $j^{th}$ decoding layer, to obtain a decoding result of the $j^{th}$ decoding layer, fusing the decoding result of the $j^{th}$ decoding layer and an encoding result outputted by an encoding layer in cross-layer connection with a $(j+1)^{th}$ decoding layer, and outputting a fusion result to the $(j+1)^{th}$ decoding layer as a final decoding result of the $j^{th}$ decoding layer, j being an increasing positive integer, $1 < j < M$, and M being a total quantity of decoding layers.

In some embodiments, each decoding layer includes a plurality of cascaded convolutional layers and an upsampling layer. Operation 10214B may be implemented in the following manners: performing cascaded convolution on a final decoding result outputted by an $(M-1)^{th}$ decoding layer through a plurality of cascaded convolutional layers included in the last decoding layer, to obtain a convolution feature map of the last decoding layer; and performing upsampling on the convolution feature map of the last decoding layer through an upsampling layer included in the last decoding layer, to obtain a decoding result of the last decoding layer, and using the decoding result outputted by the last decoding layer as the reconstructed feature map of the compressed image.

Operation 103: predict a QF of the compressed image based on the compression feature map. The QF is predicting by performing QF prediction on the compression feature map to obtain a QF of the compressed image.

Herein, in combination with the AI technology, QF prediction is performed on the compression feature map through a prediction network, to obtain the QF of the compressed image. This embodiment of the present disclosure is not limited to a structural form of the prediction network. For example, the prediction network may be an NN such as a deep NN or a convolutional NN.

In some embodiments, operation 103 may be implemented in the following manners: performing fully connected processing of the QF on the compression feature map, to obtain a second fully connected feature; and performing activation of the QF on the second fully connected feature, to obtain the QF of the compressed image.

Herein, the prediction network may include a plurality of cascaded fully connected layers and an activation layer. The fully connected processing of the QF is performed on the compression feature map through cascaded fully connected layers of the prediction network, to obtain a second fully connected feature, and the activation of the QF is performed on the second fully connected feature through an activation layer of the prediction network, to obtain the QF of the compressed image.

In the field of image processing, a fully connected layer and an activation function are important parts of the NN. The fully connected layer is an important layer type in the NN. In the fully connected layer, each neuron is connected to each neuron in a previous layer. The fully connected layer is configured to multiply outputs of all neurons in the previous layer through weights and add a bias to obtain an output of a current layer. In an image processing task, the fully connected layer is configured to integrate and classify extracted features through full connection. The fully connected layer provides characteristics of a large number of parameters and a strong expression ability in the NN, which helps learn complex patterns and relationships in data. The activation function is a non-linear function in the NN, which is configured for introducing a non-linear feature to an output of a neuron. For example, the activation function may be a hyperbolic tangent function (Sigmoid) or a rectified linear unit (ReLU). In the field of image processing, the activation function performs well in deep learning, which can accelerate convergence, reduce training difficulty, and avoid a problem of gradient disappearance. In addition, the activation function can further improve non-linear expression ability of the network, and help the network better fit complex data patterns.

In this embodiment of the present disclosure, the fully connected processing of the QF is performed on the compression feature map through the fully connected layer, to obtain a second fully connected feature, and activation of the QF is performed on the second fully connected feature through the activation function, to obtain an accurate QF of the compressed image. The fully connected layer is responsible for learning a complex relationship between features, and the activation function helps the network introduce a non-linear characteristic, thereby improving the expression capability of the network. Through reasonable design and configuration of the two components, a prediction network with a better effect may be constructed, to accurately predict a QF of a compressed image.

Operation 104: Perform denoising on the reconstructed feature map based on the QF, to obtain a denoised compressed image, the denoised compressed image being an image after compression noise is removed from the compressed image.

Herein, since different QFs may produce different compression noise for the compressed image, images compressed through different QFs may introduce compression noise of different degrees, resulting in different quality of the compressed image. Therefore, denoising is performed on the reconstructed feature map through the QF, so that the compression noise in the compressed image can be accurately removed, thereby improving quality of the denoised compressed image, and improving definition of the denoised compressed image.

In some embodiments, when a reconstruction network for reconstruction includes a plurality of cascaded decoding layers, and a reconstructed feature map is obtained through cascaded upsampling and decoding, denoising is performed, based on the QF, on a decoding result outputted by each decoding layer, to obtain a denoised decoding result outputted by each decoding layer, and the denoised decoding result outputted by each decoding layer is used as an input of a next decoding layer.

Herein, denoising is performed on the decoding result outputted by each decoding layer through the QF, to implement denoising layer by layer, thereby achieving a more accurate denoising effect. In the embodiments of the present disclosure, the QF may be multiplied by the decoding result outputted by each decoding layer, to achieve a denoising effect. Modulation may be further performed on the QF of the compressed image, to obtain a modulation factor corresponding to the QF, and denoising is performed, based on the modulation factor, on a decoding result outputted by each decoding layer, to obtain a denoised decoding result outputted by each decoding layer. The modulation factor is related to the compression noise, and is configured for more precisely removing the compression noise in the image. Through modulation of the QF, a relationship between image quality and the QF may be balanced based on an actual requirement, thereby obtaining a denoised compressed image that better meets the requirement.

In some embodiments, when the extraction network includes a plurality of cascaded encoding layers, the reconstruction network includes a plurality of cascaded decoding layers, and a cross-layer connection exists between each of the encoding layers and each of the decoding layers. When the reconstructed feature map is obtained through cascaded upsampling and decoding and fusion of decoding results, denoising is performed on a final decoding result outputted by each decoding layer based on the QF, to obtain a denoised decoding result outputted by each decoding layer, and the denoised decoding result outputted by each decoding layer is used as an input of a next decoding layer.

Herein, denoising is performed on the final decoding result outputted by each decoding layer through the QF, to implement denoising layer by layer, thereby achieving a more accurate denoising effect. In the embodiments of the present disclosure, the QF may be multiplied by the decoding result outputted by each decoding layer, to achieve a denoising effect. Modulation may be further performed on the QF of the compressed image, to obtain a modulation factor corresponding to the QF, and denoising is performed, based on the modulation factor, on a decoding result outputted by each decoding layer, to obtain a denoised decoding result outputted by each decoding layer. The modulation factor is related to the compression noise, and is configured for more precisely removing the compression noise in the image. Through modulation of the QF, a relationship between image quality and the QF may be balanced based on an actual requirement, thereby obtaining a denoised compressed image that better meets the requirement.

As shown in FIG. 3H, the extraction network includes three cascaded encoding layers, the reconstruction network includes three cascaded decoding layers, a cross-layer connection exists between the first encoding layer and the third decoding layer, and a cross-layer connection exists between the second encoding layer and the second decoding layer. Denoising is performed on a final decoding result of the first decoding layer and a final decoding result of the second decoding layer through the modulation factor.

FIG. 3F is a sixth schematic flowchart of an image processing method according to an embodiment of the present disclosure. FIG. 3F shows that operation 104 in FIG. 3A may be implemented through operation 1041 to operation 1042.

In operation 1041, modulation is performed on the QF of the compressed image, to obtain a modulation factor corresponding to the QF.

Herein, in combination with the AI technology, modulation (i.e., non-linear mapping) is performed on the QF of the compressed image through a control network, to obtain a modulation factor corresponding to the QF. This embodiment of the present disclosure is not limited to a structural form of the control network. For example, the control network may be a deep NN or a convolutional NN. The modulation factor is related to the compression noise, and is configured for more accurately removing the compression noise in the image.

In some embodiments, operation 1041 may be implemented in the following manners: performing fully connected processing of the modulation factor on the QF of the compressed image, to obtain a first fully connected feature; and performing activation of the modulation factor on the first fully connected feature, to obtain the modulation factor corresponding to the QF.

Herein, the control network may include a plurality of cascaded fully connected layers and an activation layer. The fully connected processing of the modulation factor is performed on the QF of the compressed image through cascaded fully connected layers of the control network, to obtain a second fully connected feature, and the activation of the modulation factor is performed on the second fully connected feature through the activation layer of the control network, to obtain the modulation factor corresponding to the QF.

In this embodiment of the present disclosure, the fully connected processing of the modulation factor is performed on the QF of the compressed image through a fully connected layer, to obtain a first fully connected feature, and the activation of the modulation factor is performed on the first fully connected feature through the activation layer, to obtain an accurate modulation factor. The fully connected layer is responsible for learning a complex relationship between features, and the activation function helps the network introduce a non-linear characteristic, thereby improving the expression capability of the network. Through reasonable design and configuration of the two components, a control network with a better effect may be constructed, to accurately predict the modulation factor.

In operation 1042, denoising is performed on the reconstructed feature map based on the modulation factor, to obtain a denoised compressed image.

In some embodiments, the modulation factor includes a first factor (for example, γ) and a second factor (for example, β). Operation 1042 may be implemented in the following manners: multiplying the reconstructed feature map by the first factor, to obtain a product result; and adding the product result and the second factor, to obtain the denoised compressed image.

FIG. 4 is a seventh schematic flowchart of an image processing method according to an embodiment of the present disclosure. FIG. 4 shows that FIG. 3A further includes operation 105. In operation 105, high-resolution image reconstruction is performed on the denoised compressed image, to obtain a high-resolution image.

Herein, the high-resolution image reconstruction is configured for reconstruction of a low-resolution image, to reconstruct a high-resolution image. For example, the high-resolution image reconstruction may be simple upsampling, and upsampling is performed on the denoised compressed image through a convolutional layer in an NN, to obtain a high-resolution image. Compared with the denoised compressed image as the low-resolution image, an image obtained after high-resolution image reconstruction is performed on the denoised compressed image is a high-resolution image.

The high-resolution image reconstruction includes a super-resolution technology (i.e., a process of increasing the resolution of an image through hardware or software, and obtaining a high-resolution image through a series of low-resolution images). The super-resolution technology can improve definition and details of the image, for example, a deep learning-based super-resolution algorithm. Through the algorithm, a denoised compressed image is inputted into a deep NN, and reconstruction (i.e., upsampling) is performed through the deep NN, to obtain a high-resolution image. This embodiment of the present disclosure is not limited to a form of a super-resolution algorithm, for example, a video super-resolution (VSR) algorithm, a basic deep learning video super-resolution algorithm (basicVSR), or a compression-informed video super-resolution model (COMISR).

In some embodiments, operation 105 may be implemented in the following manners: determining an adjacent image of the denoised compressed image, the adjacent image being a denoised compressed image adjacent to the denoised compressed image in an image sequence; performing feature extraction on the denoised compressed image and the adjacent image, to obtain a first feature of the denoised compressed image and a second feature of the adjacent image; performing fusion on the first feature and the second feature, to obtain a fused feature of the denoised compressed image; and performing reconstruction on the fused feature of the denoised compressed image, to obtain the high-resolution image.

The fusion may be performing element-by-element addition on the first feature and the second feature, and using an addition result as a fused feature of the denoised compressed image; or performing concatenation on the first feature and the second feature, and using a concatenation result as the fused feature of the denoised compressed image. The feature processing may be an upsampling operation. For a fused feature of H*W*C, a feature map of Hs*Ws*3 is finally obtained through the upsampling operation, s representing an upsampling factor, and 3 representing an RGB channel of a final output.

For example, the foregoing super-resolution technology is applied to the denoised compressed image. In other words, an adjacent image of the denoised compressed image is first determined, the adjacent image being a denoised compressed image adjacent to the denoised compressed image in an image sequence. Then feature extraction is performed on the denoised compressed image through the NN model, to obtain a first feature of the denoised compressed image, and feature extraction is performed on the adjacent image through the neural network model, to obtain a second feature of the adjacent image. Next, concatenation is performed on the first feature and the second feature, and a concatenation result is used as the fused feature of the denoised compressed image. Finally, reconstruction is performed on the fused feature of the denoised compressed image, to obtain a super-resolution image. The super-resolution image is a high-resolution image having a resolution greater than that of the denoised compressed image.

Next, exemplary application of this embodiment of the present disclosure in an actual application scenario is to be described.

The embodiments of the present disclosure may be applied to various compression scenarios, for example, a compressed video super-resolution scenario. However, video super-resolution may be widely applied to online and offline content playback, live streaming and on-demand scenarios, and fields such as old film restoration and real time communication (RTC) super-resolution. Further research and exploration in the foregoing fields may be performed for researchers. The application may also be user-oriented and integrated into a local end to perform video super-resolution, thereby improving picture quality of video content and improving smoothness of the video. In addition, the application fields of the compressed video super-resolution technology include, but are not limited to, video conferencing, video advertising, video live streaming, video on-demand, virtual reality, augmented reality, and the like. The technology may improve video quality, reduce bandwidth requirements, and improve data transmission efficiency, and is widely applied to fields such as e-commerce, medical treatment, education, and entertainment.

With the continuous development of video technology, people have an increasingly high requirement for video quality. However, transmission, storage, and processing costs of high-resolution videos are often relatively high, which limits the development of video applications. Therefore, video compression technologies emerge to reduce storage and transmission costs of video data. However, video compression often causes problems such as loss of image details and resolution reduction, which is unacceptable for some applications that require high-resolution video.

In view of this, a super-resolution technology is adopted in the embodiments of the present disclosure, which is intended to reconstruct a high-resolution video from a low-resolution video. In a compressed video super-resolution technology, not only a compression rate of a video needs to be ensured, but also details and a resolution of an original video need to be restored as much as possible. In the embodiments of the present disclosure, a QF of image frames after video compression is analyzed dynamically, and compression noise corresponding to different compression degrees is eliminated as much as possible, to obtain image frames with the same quality as possible, thereby improving quality of a video reconstructed through a super-resolution video algorithm.

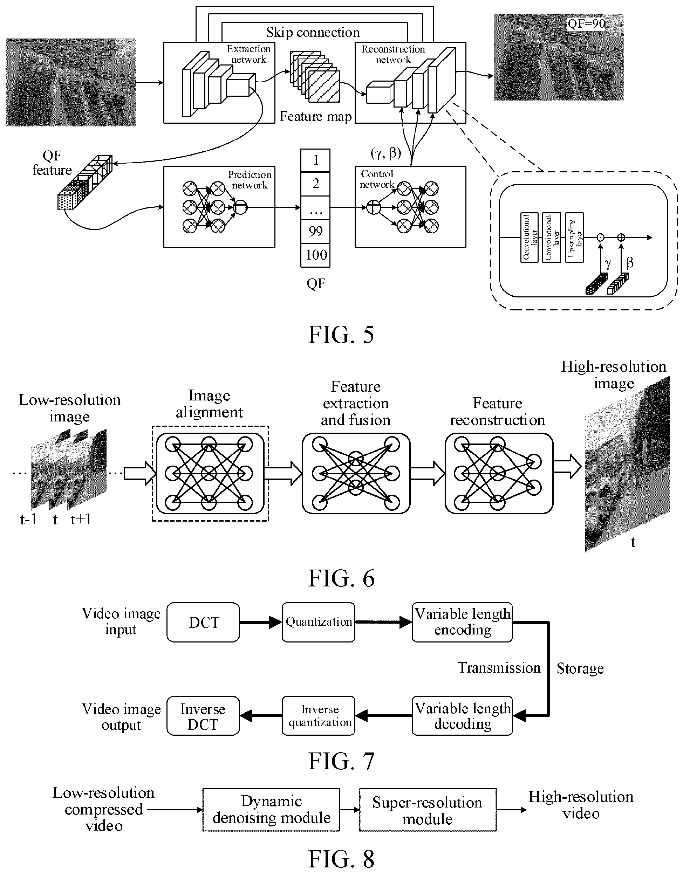

A process of removing compression noise based on a QF is explained and described below with reference to FIG. 5 to FIG. 6.

First, in the embodiments of the present disclosure, a high-bitrate video may be compressed into a low-bitrate video through a video compression algorithm, to facilitate transmission and storage. The video compression algorithm includes two operations: spatial domain compression and frequency domain compression. In the spatial domain compression, a data volume of an image is reduced by removing redundant information and reducing precision, for example, discrete cosine transform (DCT) and wavelet transform (WT). Through these methods, the image is converted into another representation form, to compress a video signal. As shown in FIG. 7, an inputted video image is first transformed through DCT on an encoder side, then quantization is performed on the transformed video image, then variable length encoding is performed on a quantization result, and the encoding result is transmitted and stored. Variable length decoding is first performed on a received encoding result on a decoder side, then inverse quantization is performed on a decoding result, and finally inverse discrete cosine transform (IDCT) is performed on an inverse quantization result, to obtain an output of the video image. In the frequency domain compression, a high-frequency part may be removed to further reduce a data volume. A frequency domain compression algorithm includes two methods: lossless compression and lossy compression. The lossless compression is mainly implemented through an entropy encoding technology, for example, Huffman encoding and arithmetic encoding. The lossy compression is to obtain a higher compression ratio at the expense of image quality. The lossy compression algorithm may be a compression method based on motion estimation and prediction, for example, H.264 and high efficiency video coding (HEVC).

Different QFs (QF, QF) bring compression noise of different degrees. For example, in the foregoing DCT algorithm, compression noise is mainly caused by a quantization matrix, and different QFs correspond to different quantization matrices. A factor matrix D in a frequency domain is obtained after the DCT is performed on an image block in the image, and the factor matrix D is similar to a factor matrix obtained after Fourier transform.

Since different compression degrees correspond to different quantization matrices, compressed factor matrices of different compression degrees may be obtained through different quantization matrices. A compressed factor matrix (i.e., a factor matrix of a quantization error (compression noise) caused by compression) is obtained by performing element-by-element division on the factor matrix D and the quantization matrix Q and then performing a quantization (rounding) operation. A larger QF indicates fewer elements reserved in the upper left corner of the compressed factor matrix, resulting in greater compression noise.

For example, the factor matrix

$$D = \begin{bmatrix} 162.3 & 40.6 & 20.0 & 72.3 & 30.3 & 12.5 & -19.7 & -11.5 \\ 30.5 & 108.4 & 10.5 & 32.3 & 27.7 & -15.5 & 18.4 & -2.0 \\ -94.1 & -60.1 & 12.3 & -43.4 & -31.3 & 6.1 & -3.3 & 7.1 \\ -38.6 & -83.4 & -5.4 & -22.2 & -13.5 & 15.5 & -1.3 & 3.5 \\ -31.3 & 17.9 & -5.5 & -12.4 & 14.3 & -6.0 & 11.5 & -6.0 \\ -0.9 & -11.8 & 12.8 & 0.2 & 28.1 & 12.6 & 8.4 & 2.9 \\ 4.6 & -2.4 & 12.2 & 6.6 & -18.7 & -12.8 & 7.7 & 12.0 \\ -10.0 & 11.2 & 7.8 & -16.3 & 21.5 & 0.0 & 5.9 & 10.7 \end{bmatrix}$$

a quantization matrix

$$Q_{10} = \begin{bmatrix} 80 & 60 & 50 & 80 & 120 & 200 & 255 & 255 \\ 55 & 60 & 70 & 95 & 130 & 255 & 255 & 255 \\ 70 & 65 & 80 & 120 & 200 & 255 & 255 & 255 \\ 70 & 85 & 110 & 145 & 255 & 255 & 255 & 255 \\ 90 & 110 & 185 & 255 & 255 & 255 & 255 & 255 \\ 120 & 175 & 255 & 255 & 255 & 255 & 255 & 255 \\ 245 & 255 & 255 & 255 & 255 & 255 & 255 & 255 \\ 255 & 255 & 255 & 255 & 255 & 255 & 255 & 255 \end{bmatrix}$$

corresponding to a QF 10, and a quantization matrix

$$Q_{50} = \begin{bmatrix} 16 & 11 & 10 & 16 & 24 & 40 & 51 & 61 \\ 12 & 12 & 14 & 19 & 26 & 58 & 60 & 55 \\ 14 & 13 & 16 & 24 & 40 & 57 & 69 & 56 \\ 14 & 17 & 22 & 29 & 51 & 87 & 80 & 62 \\ 18 & 22 & 37 & 56 & 68 & 109 & 103 & 77 \\ 24 & 35 & 55 & 64 & 81 & 104 & 113 & 92 \\ 49 & 64 & 78 & 87 & 103 & 121 & 120 & 101 \\ 72 & 92 & 95 & 98 & 112 & 100 & 103 & 99 \end{bmatrix}$$

corresponding to a QF 50, and then the factor matrix D is compressed through the quantization matrix $Q_{10}$ according to Equation $C_{i,j} = round(\dfrac{D_{i,j}}{Q_{i,j}})$ , to obtain a compressed factor matrix

$$C = \begin{bmatrix} 10 & 4 & 2 & 5 & 1 & 0 & 0 & 0 \\ 3 & 9 & 1 & 2 & 1 & 0 & 0 & 0 \\ -7 & -5 & 1 & -2 & -1 & 0 & 0 & 0 \\ -3 & -5 & 0 & -1 & 0 & 0 & 0 & 0 \\ -2 & 1 & 0 & 0 & 0 & 0 & 0 & 0 \\ 0 & 0 & 0 & 0 & 0 & 0 & 0 & 0 \\ 0 & 0 & 0 & 0 & 0 & 0 & 0 & 0 \\ 0 & 0 & 0 & 0 & 0 & 0 & 0 & 0 \end{bmatrix}.$$

.

In view of this, in the embodiments of the present disclosure, compression noise of different degrees caused by compression is removed through a dynamic denoising network. Dynamic denoising is modeled as an image restoration problem, and a QF is dynamically predicted in an image restoration process, thereby better removing the compression noise caused by compression.

As for the dynamic denoising network shown in FIG. 5, the dynamic denoising network includes a network of a U-shaped structure. The network of the U-shaped structure includes an extraction network (decoupler) and a reconstruction network (reconstructor). First, features are extracted layer by layer through a decoupler (including a plurality of convolutional layers (conv) and a downsampling layer) until a separation feature map is extracted, and then a reconstructed feature map is obtained through reconstruction and restoration layer by layer through a skip connection on the reconstructor (including the plurality of convolutional layers (conv) and an upsampling layer). In addition, a last layer of the decoupler is outputted as a QF feature, and then the QF feature is predicted through a prediction network (predictor) (including a plurality of connection layers and an activation layer), to obtain a value of a predicted QF. Next, the value of the predicted QF is modulated through a control network (controller) (including a plurality of connection layers and an activation layer), to obtain two modulation factors of γ and β, and features outputted by the reconstructor are modulated through the two modulation factors of γ and β. For example, an output feature of a certain layer in the reconstructor is f, and a feature f' after modulation through two modulation factors of γ and β is equal to γ*f + β.

Therefore, an image dynamically denoised through a dynamic denoising network may basically approximate to a low-resolution image without noise after downsampling, so that a high-resolution image may be reconstructed through a super-resolution algorithm.

The super-resolution algorithm is specifically described below. Through the super-resolution algorithm, a series of reconstruction super-resolution operations are performed on an inputted low-resolution (LR) video, i.e., an image sequence, to finally obtain a high-resolution image sequence.

As shown in FIG. 6, the reconstruction super-resolution operation mainly includes three operations, i.e., image frame alignment, feature extraction and fusion, and feature reconstruction. First, image alignment is performed on image frames (i.e., the low-resolution image), to obtain an aligned image. For example, for a $t^{th}$ image frame, the $t^{th}$ image frame is aligned with a $(t-1)^{th}$ image frame in the image sequence. An alignment process is as follows. An offset (for example, a motion vector) between the $t^{th}$ image frame and the $(t-1)^{th}$ image frame is first calculated, and then the $t^{th}$ image frame is aligned through the motion vector, to obtain the aligned $t^{th}$ image frame. The embodiments of the present disclosure are not limited to an image alignment algorithm, for example, an optical flow estimation algorithm. Then feature extraction and fusion are performed on the aligned image to obtain a fused feature. For example, feature extraction is separately performed on a $t^{th}$ frame of the aligned image and a $(t-1)^{th}$ frame of the aligned image, to obtain an extraction feature of the $t^{th}$ frame of the aligned image and an extraction feature of the $(t-1)^{th}$ frame of the aligned image. Then feature fusion (for example, feature concatenation) is performed on the extraction feature of the $t^{th}$ frame of the aligned image and the extraction feature of the $(t-1)^{th}$ frame of the aligned image, to obtain a fused feature. Finally, feature reconstruction is performed on the fused feature to obtain a high-resolution image. A core of the feature reconstruction is an upsampling operation. For a feature map of H*W*C, a feature map of Hs*Ws*3 is finally obtained through the upsampling operation, s representing an upsampling factor, and 3 representing an RGB channel of a final output.

The super-resolution algorithm is a supervised learning method, which is sampling paired data of an LR video and an HR video to perform supervised training. In the embodiments of the present disclosure, the HR video may be first obtained, and then the HR video is downsampled through a downsampling strategy (for example, bicubic downsampling), to obtain a corresponding LR video, i.e., a low-resolution image sequence, so that the HR video and the LR video obtained through downsampling form paired data to perform supervised training.

A main point of modeling of the super-resolution algorithm is processing a low-resolution video, and compression noise produced by a compressed video is not considered. Therefore, when the low-resolution video has compression noise, the compression noise affects three modules such as an image alignment module, a feature extraction module, and a feature reconstruction module. Therefore, in the embodiments of the present disclosure, dynamic denoising may be first performed on the compressed video (i.e., the low-resolution video) through the foregoing dynamic denoising network, to ensure that the low-resolution image that is finally inputted into the super-resolution algorithm approximates to the foregoing downsampled video. In other words, no compression noise is produced.

As shown in FIG. 8, the foregoing super-resolution algorithm and the dynamic denoising network may be used as two independent modules (i.e., a video super-resolution module and a dynamic denoising module), and connected in series for application. For example, a low-resolution compressed video is inputted to the dynamic denoising module, dynamic denoising is performed on each image in the low-resolution compressed video through the dynamic denoising module to obtain a denoised compressed video, then the denoised compressed video is inputted to a video super-resolution module, and video super-resolution is performed on the denoised compressed video through the video super-resolution module, to obtain a high-resolution video.

In practical application, if a higher requirement is imposed on image quality of a video, the dynamic denoising module and the video super-resolution module may be jointly optimized and trained, to obtain a better model.

Based on the above, according to the image processing method provided in the embodiments of the present disclosure, the QF of the image after video compression can be analyzed dynamically, and compression noise brought by different compression degrees is eliminated as much as possible, to obtain images with the same quality, thereby improving quality of a video reconstructed through the super-resolution algorithm.

At this point, the image processing method provided in the embodiments of the present disclosure has been described in combination with the exemplary applications and implementations of the electronic device provided in the embodiments of the present disclosure. An embodiment of the present disclosure further provides an image processing apparatus. In practical application, each functional module in the image processing apparatus may be collaboratively implemented by a hardware resource of an electronic device (for example, a terminal device, a server, or a server cluster), for example, a computing resource such as a processor, a communication resource (for example, configured to support implementation of communication in various manners such as an optical cable and a cellular network), and a memory. FIG. 2 shows the image processing apparatus 555 stored in the memory 550, which may be software in forms such as a program and a plug-in, for example, an implementation such as a software module designed in a programming language such as C/C++ or Java, application software designed in a programming language such as C/C++ or Java, a special software module in a large software system, an application program interface, a plug-in, or a cloud service. Different implementations are described below through examples.

The image processing apparatus 555 includes a series of modules, including an extraction module 5551, a reconstruction module 5552, a prediction module 5553, and a denoising module 5554. A solution of cooperatively implementing image processing through the modules in the image processing apparatus 555 provided in the embodiments of the present disclosure continues to be described below.

The extraction module 5551 is configured to perform feature extraction on a compressed image to obtain a compression feature map of the compressed image. The feature extraction is to obtain a compression feature map which is also referred to as a feature map hereinafter. The reconstruction module 5552 is configured to perform reconstruction on the compression feature map to obtain a reconstructed feature map of the compressed image. The reconstruction on the compressed feature map is to reconstruct the feature map to obtain a reconstructed feature map. The prediction module 5553 is configured to predict a QF of the compressed image, where the QF is predicting by performing QF prediction on the compression feature map to obtain a QF of the compressed image. The denoising module 5554 is configured to perform denoising on the reconstructed feature map based on the QF, to obtain a denoised compressed image, the denoised compressed image being an image after compression noise is removed from the compressed image.

In some embodiments, the extraction module 5551 is further configured to call an extraction network, and perform downsampling and encoding on the compressed image through the extraction network, to obtain a compression feature map of the compressed image. The reconstruction module 5552 is further configured to call a reconstruction network, and perform upsampling and decoding on the compression feature map through the reconstruction network, to obtain a reconstructed feature map of the compressed image.

In some embodiments, the extraction network includes a plurality of cascaded encoding layers. The extraction module 5551 is further configured to: perform downsampling and encoding on the compressed image through a first encoding layer of the plurality of cascaded encoding layers; output an encoding result of the first encoding layer to a subsequent cascaded encoding layer, and further perform the downsampling and encoding and the outputting of the encoding result through the subsequent cascaded encoding layer until a last encoding layer; and use an encoding result outputted by the last encoding layer as the compression feature map of the compressed image.

In some embodiments, each of the encoding layers includes a plurality of cascaded convolutional layers and a downsampling layer. The extraction module 5551 is further configured to perform cascaded convolution on an encoding result outputted by an $(i-1)^{th}$ encoding layer through a plurality of cascaded convolutional layers included in an $i^{th}$ encoding layer, to obtain a convolution feature map; and perform downsampling on the convolution feature map through a downsampling layer included in the $i^{th}$ encoding layer, to obtain an encoding result of the $i^{th}$ encoding layer, and output the encoding result of the $i^{th}$ encoding layer to an $(i+1)^{th}$ encoding layer, i being an increasing positive integer, $1 < i < N$, and N being a total quantity of encoding layers.

In some embodiments, the reconstruction network includes a plurality of cascaded decoding layers. the reconstruction module 5552 is further configured to: perform upsampling and decoding on the compression feature map through a first decoding layer of the plurality of cascaded decoding layers; output a decoding result of the first decoding layer to a subsequent cascaded decoding layer, and further perform the upsampling and decoding and the outputting of the decoding result through the subsequent cascaded decoding layer until a last decoding layer; and use a decoding result outputted by the last decoding layer as the reconstructed feature map of the compressed image.

In some embodiments, each decoding layer includes a plurality of cascaded convolutional layers and an upsampling layer. The reconstruction module 5552 is further configured to perform cascaded convolution on a decoding result outputted by a $(j-1)^{th}$ decoding layer through a plurality of cascaded convolutional layers included in a $j^{th}$ decoding layer, to obtain a convolution feature map; and perform upsampling on the convolution feature map through an upsampling layer included in the $j^{th}$ decoding layer, to obtain a decoding result of the $j^{th}$ decoding layer, and output the decoding result of the $j^{th}$ decoding layer to a $(j+1)^{th}$ decoding layer, j being an increasing positive integer, $1 < j < M$, and M being a total quantity of decoding layers.

In some embodiments, the reconstruction module 5552 is further configured to perform denoising on a decoding result outputted by each of the decoding layers based on the QF, to obtain a denoised decoding result outputted by each of the decoding layers, and use the denoised decoding result outputted by each of the decoding layers as an input of a next decoding layer.

In some embodiments, when the extraction network includes the plurality of cascaded encoding layers, the reconstruction network includes the plurality of cascaded decoding layers, and a cross-layer connection exists between each of the encoding layers and each of the decoding layers. The reconstruction module 5552 is further configured to: perform upsampling and decoding on the compression feature map through a first decoding layer of the plurality of cascaded decoding layers; fuse a decoding result of the upsampling and decoding and an encoding result outputted by an encoding layer in cross-layer connection with the second decoding layer, and output a fusion result to a subsequent cascaded decoding layer as a final decoding result of the first decoding layer; further perform the upsampling and decoding, the fusion of the decoding results, and the outputting of the final decoding result through the subsequent cascaded decoding layer; and use a decoding result outputted by the last decoding layer as the reconstructed feature map of the compressed image.

In some embodiments, the reconstruction module 5552 is further configured to perform denoising on a final decoding result outputted by each of the decoding layers based on the QF, to obtain a denoised decoding result outputted by each of the decoding layers, and use the denoised decoding result outputted by each of the decoding layers as an input of a next decoding layer.

In some embodiments, the denoising module 5554 is further configured to: perform modulation on the QF of the compressed image, to obtain a modulation factor corresponding to the QF; and perform denoising on the reconstructed feature map based on the modulation factor, to obtain a denoised compressed image.

In some embodiments, the denoising module 5554 is further configured to perform fully connected processing of the modulation factor on the QF of the compressed image, to obtain a first fully connected feature; and perform activation of the modulation factor on the first fully connected feature, to obtain the modulation factor corresponding to the QF.

In some embodiments, the modulation factor includes a first factor and a second factor. The denoising module 5554 is further configured to multiply the reconstructed feature map by the first factor, to obtain a product result; and add the product result and the second factor, to obtain the denoised compressed image.

In some embodiments, the prediction module 5553 is further configured to perform fully connected processing of the QF on the compression feature map, to obtain a second fully connected feature; and perform activation of the QF on the second fully connected feature, to obtain the QF of the compressed image.

In some embodiments, the reconstruction module 5555 is configured to perform high-resolution image reconstruction on the denoised compressed image, to obtain a high-resolution image.

In some embodiments, the reconstruction module 5555 is further configured to: determine an adjacent image of the denoised compressed image, the adjacent image being a denoised compressed image adjacent to the denoised compressed image in an image sequence; perform feature extraction on the denoised compressed image and the adjacent image, to obtain a first feature of the denoised compressed image and a second feature of the adjacent image; perform fusion on the first feature and the second feature, to obtain a fused feature of the denoised compressed image; and perform reconstruction on the fused feature of the denoised compressed image, to obtain the high-resolution image.

An embodiment of the present disclosure provides a computer program product, the computer program product including a computer program or a computer-executable instruction, the computer program or the computer-executable instruction being stored in a computer-readable storage medium. A processor of an electronic device reads the computer program or the computer-executable instruction from the computer-readable storage medium, and the processor executes the computer program or the computer-executable instruction, so that the electronic device performs the foregoing image processing method in the embodiments of the present disclosure.

An embodiment of the present disclosure provides a computer-readable storage medium having a computer-executable instruction or a computer program stored therein, the computer-executable instruction or the computer program, when executed by a processor, causing the processor to perform the image processing method provided in the embodiments of the present disclosure, for example, the image processing method shown in FIG. 3A to FIG. 3F and FIG. 4.

In some embodiments, the computer-readable storage medium may be a memory such as a ferromagnetic RAM (FRAM), a ROM, a programmable ROM (PROM), an erasable PROM (EPROM), an electrically EPROM (EEPROM), a flash memory, a magnetic surface memory, a compact disc, or a compact disc ROM (CD-ROM), or may be various devices including one or any combination of the foregoing memories.

In some embodiments, the computer-executable instruction may be written in any form of a programming language (including a compiled or interpreted language, or a declarative or procedural language) in the form of a program, software, a software module, a script, or code, and may be deployed in any form, which may be deployed as a standalone program or as a module, components, a subroutine, or other units suitable for use in a computing environment.

In an example, the computer-executable instruction may but may not necessarily correspond to a file in a file system, may be stored in a part of the file for storing other programs or data, for example, stored in one or more scripts in a hypertext markup language (HTML) document, stored in a single file specially used for the discussed program, or stored in a plurality of collaborative files (for example, files storing one or more modules, a subprogram, or a code part).

In an example, the computer-executable instruction may be deployed to be executed on one electronic device, or executed on a plurality of electronic devices located at one location, or executed on a plurality of electronic devices distributed at a plurality of locations and connected through a communication network.

The embodiments of the present disclosure relate to related data such as user information. User permission or consent needs to be obtained when the embodiments of the present disclosure are applied to specific products or technologies, and collection, use, and processing of related data need to comply with relevant laws, regulations, and standards of relevant countries and regions.

The foregoing descriptions are merely embodiments of the present disclosure and are not intended to limit the protection scope of the present disclosure. Any modification, equivalent replacement, or improvement made within the spirit and principle of the present disclosure falls within the protection scope of the present disclosure.

**Claims**

1. An image processing method, executable by an electronic device, the method comprising:

   obtaining a feature map of a compressed image;
   reconstructing the feature map of the compressed image;
   performing denoising on the reconstructed feature map based on a quality factor, QF, of the compressed image to

**EP 4 625 326 A1**

obtain a denoised compressed image, wherein the QF of the compressed image is predicted based on the feature map.

2. The method according to claim 1, wherein

the obtaining a feature map of the compressed image comprises:

downsampling and encoding the compressed image through an extraction network, to obtain a feature map of the compressed image; and
the reconstructing the feature map of the compressed image comprises:
upsampling and decoding the feature map through a reconstruction network, to obtain a reconstructed feature map of the compressed image.

3. The method according to claim 2, wherein

the extraction network comprises a plurality of cascaded encoding layers; and
the downsampling and encoding the compressed image through the extraction network, to obtain a feature map of the compressed image comprises:

downsampling and encoding the compressed image through a first encoding layer of the plurality of cascaded encoding layers;
outputting an encoding result of the first encoding layer to a subsequent cascaded encoding layer;
downsampling and encoding, and outputting of the encoding result through the subsequent cascaded encoding layer until a last encoding layer; and
using an encoding result outputted by the last encoding layer as the feature map of the compressed image.

4. The method according to claim 3, wherein

each of the plurality of encoding layers comprises a plurality of cascaded convolutional layers and a downsampling layer; and
the downsampling and encoding and outputting of the encoding result through the subsequent cascaded encoding layer comprises:

successively performing convolution on an encoding result outputted by an $(i-1)^{th}$ encoding layer through a plurality of cascaded convolutional layers comprised in an $i^{th}$ encoding layer, to obtain a convolution feature map;
downsampling the convolution feature map through a downsampling layer comprised in the $i^{th}$ encoding layer, to obtain an encoding result of the $i^{th}$ encoding layer, and outputting the encoding result of the $i^{th}$ encoding layer to an $(i+1)^{th}$ encoding layer,
i being an increasing positive integer, $1 < i < N$, and N being a total quantity of encoding layers.

5. The method according to claim 2, wherein

the reconstruction network comprises a plurality of cascaded decoding layers; and
the upsampling and decoding the feature map through the reconstruction network, to obtain a reconstructed feature map of the compressed image comprises:

upsampling and decoding the feature map through a first decoding layer of the plurality of cascaded decoding layers;
outputting a decoding result of the first decoding layer to a subsequent cascaded decoding layer; and
upsampling and decoding, and outputting of the decoding result through the subsequent cascaded decoding layer until a last decoding layer; and
using a decoding result outputted by the last decoding layer as the reconstructed feature map of the compressed image.

6. The method according to claim 5, wherein

each of the plurality of decoding layers comprises a plurality of cascaded convolutional layers and an upsampling layer; and

18

the upsampling and decoding and outputting of the decoding result through the subsequent cascaded decoding layer comprises:

successively performing convolution on a decoding result outputted by a $(j-1)^{th}$ decoding layer through a plurality of cascaded convolutional layers comprised in a $j^{th}$ decoding layer, to obtain a convolution feature map;

upsampling the convolution feature map through an upsampling layer comprised in the $j^{th}$ decoding layer, to obtain a decoding result of the $j^{th}$ decoding layer, and outputting the decoding result of the $j^{th}$ decoding layer to a $(j+1)^{th}$ decoding layer,

j being an increasing positive integer, $1 < j < M$, and M being a total quantity of decoding layers.

7. The method according to claim 5, further comprising:
for each of the decoding layers, performing denoising on the decoding result outputted by the decoding layer based on the QF to obtain a denoised decoding result outputted by the respective decoding layer, and using the denoised decoding result outputted by the decoding layer as an input of a next decoding layer.

8. The method according to any one of claims 2 to 7, wherein

when the extraction network comprises the plurality of cascaded encoding layers, the reconstruction network comprises the plurality of cascaded decoding layers, and a connection exists between the encoding layers and the decoding layers; and

the upsampling and decoding the feature map through the reconstruction network, to obtain a reconstructed feature map of the compressed image comprises:

upsampling and decoding the feature map through a first decoding layer of the plurality of cascaded decoding layers;

fusing a decoding result of the upsampling and decoding and an encoding result outputted by an encoding layer in connection with the second decoding layer, and outputting a fusion result as a decoding result of the first decoding layer to a subsequent cascaded decoding layer;

performing, through the subsequent cascaded decoding layer, the upsampling and decoding, and the fusing the decoding result, and the outputting of the decoding result; and

using a decoding result outputted by the last decoding layer as the reconstructed feature map of the compressed image.

9. The method according to claim 8, further comprising:
for each of the decoding layers, performing denoising on a decoding result outputted by the decoding layers based on the QF, to obtain a denoised decoding result outputted by the decoding layer, and using the denoised decoding result outputted by the decoding layer as an input of a next decoding layer.

10. The method according to any one of claims 1 to 9, wherein the performing denoising on the reconstructed feature map based on the QF to obtain a denoised compressed image comprises:

modulating the QF of the compressed image, to obtain a modulation factor of the QF; and

performing denoising on the reconstructed feature map based on the modulation factor, to obtain a denoised compressed image.

11. The method according to claim 10, wherein the modulating the QF of the compressed image, to obtain a modulation factor of the QF comprises:

performing fully connected processing on the QF of the compressed image, to obtain a first fully connected feature; and

activating the first fully connected feature, to obtain the modulation factor of the QF.

12. The method according to claim 10, wherein

the modulation factor comprises a first factor and a second factor; and

the performing denoising on the reconstructed feature map based on the modulation factor, to obtain a denoised compressed image comprises:

multiplying the reconstructed feature map by the first factor, to obtain a product result; and
adding the product result and the second factor, to obtain the denoised compressed image.

13. The method according to claim 1, wherein the QF of the compressed image is predicted by:

performing fully connected processing on the feature map, to obtain a second fully connected feature; and
activating the second fully connected feature, to obtain the QF of the compressed image.

14. The method according to claim 1, further comprising: after the performing denoising on the reconstructed feature map based on the QF to obtain a denoised compressed image,
reconstructing a high-resolution image of the denoised compressed image.

15. The method according to claim 14, wherein the reconstructing a high-resolution image of the denoised compressed image comprises:

determining an adjacent image of the denoised compressed image, the adjacent image being a denoised compressed image adjacent to the denoised compressed image in an image sequence;
extracting a first feature of the denoised compressed image and a second feature of the adjacent image;
fusing the first feature and the second feature, to obtain a fused feature of the denoised compressed image; and
reconstructing the fused feature of the denoised compressed image, to obtain the high-resolution image.

16. An image processing apparatus, comprising:

an extraction module, configured to obtain a feature map of a compressed image;
a reconstruction module, configured to reconstruct the feature map of the compressed image;
a denoising module, configured to perform denoising on the reconstructed feature map based on a quality factor, QF, of the compressed image to obtain a denoised compressed image, wherein the QF of the compressed image is predicted based on the feature map.

17. An electronic device, comprising:

a memory, configured to store a computer program or a computer-executable instruction; and
a processor, configured to implement the image processing method according to any one of claims 1 to 15 when executing the computer program or the computer-executable instruction stored in the memory.

18. A computer-readable storage medium, having a computer program or a computer-executable instruction stored therein, the computer program or the computer-executable instruction, when executed by a processor, implementing the image processing method according to any one of claims 1 to 15.

19. A computer program product, comprising a computer program or a computer-executable instruction, the computer program or the computer-executable instruction, when executed by a processor, implementing the image processing method according to any one of claims 1 to 15.

FIG. 1

FIG. 2

Perform feature extraction on a compressed image, to obtain a
compression feature map of the compressed image ⟍ 101

↓

Perform reconstruction on the compression feature map, to obtain a
reconstruction feature map of the compressed image ⟍ 102

↓

Perform QF prediction on the compression feature map, to obtain a QF
of the compressed image ⟍ 103

↓

Perform denoising on the reconstruction feature map based on the QF,
to obtain a denoised compressed image ⟍ 104

## FIG. 3A

Perform feature extraction on a compressed image, to obtain a
compression feature map of the compressed image

Call an extraction network, and perform downsampling and encoding
on the compressed image through the extraction network, to obtain
the compression feature map of the compressed image ⟍ 1011  ⟍ 101

↓

Perform reconstruction on the compression feature map, to obtain a
reconstruction feature map of the compressed image ⟍ 102

↓

Perform QF prediction on the compression feature map, to obtain a QF
of the compressed image ⟍ 103

↓

Perform denoising on the reconstruction feature map based on the modulation factor,
to obtain a denoised compressed image, the denoised compressed image being a
compressed image with compression noise removed ⟍ 104

## FIG. 3B

| Perform feature extraction on a compressed image, to obtain a compression feature map of the compressed image | 101 |

| Perform reconstruction on the compression feature map, to obtain a reconstruction feature map of the compressed image<br><br>Call a reconstruction network, and perform upsampling and decoding on the compression feature map through the reconstruction network, to obtain the reconstruction feature map of the compressed image — 1021 | 102 |

| Perform QF prediction on the compression feature map, to obtain a QF of the compressed image | 103 |

| Perform denoising on the reconstruction feature map based on the modulation factor, to obtain a denoised compressed image, the denoised compressed image being a compressed image with compression noise removed | 104 |

## FIG. 3C

| Perform upsampling and decoding on the compression feature map through the reconstruction network, to obtain the reconstruction feature map of the compressed image | 1021 |

| Perform upsampling and decoding on the compression feature map through a first decoding layer of a plurality of cascaded decoding layers | 10211A |

| Output a decoding result of the first decoding layer to a subsequent cascaded decoding layer, and further perform the upsampling and decoding and the outputting of the decoding result through the subsequent cascaded decoding layer until a last decoding layer | 10212A |

| Use a decoding result outputted by the last decoding layer as the reconstruction feature map of the compressed image | 10213A |

## FIG. 3D

Perform upsampling and decoding on the compression feature map through the reconstruction network, to obtain the reconstruction feature map of the compressed image — 1021

Perform upsampling and decoding on the compression feature map through a first decoding layer of a plurality of cascaded decoding layers — 10211B

Fuse a decoding result of the upsampling and decoding and an encoding result outputted by an encoding layer in cross-layer connection with the second decoding layer, and output a fusion result to a subsequent cascaded decoding layer as a final decoding result of the first decoding layer — 10212B

Further perform the upsampling and decoding, the fusion of the decoding results, and the outputting of the final decoding result through the subsequent cascaded decoding layer — 10213B

Further perform the upsampling and decoding, the fusion of the decoding results, and the outputting of the final decoding result through the subsequent cascaded decoding layer — 10214B

**FIG. 3E**

Perform feature extraction on a compressed image, to obtain a compression feature map of the compressed image — 101

Perform reconstruction on the compression feature map, to obtain a reconstruction feature map of the compressed image — 102

Perform QF prediction on the compression feature map, to obtain a QF of the compressed image — 103

Perform denoising on the reconstruction feature map based on the QF, to obtain a denoised compressed image — 104

Perform modulation on the QF of the compressed image, to obtain a modulation factor corresponding to the QF — 1041

Perform denoising on the reconstruction feature map based on the modulation factor, to obtain a denoised compressed image — 1042

**FIG. 3F**

FIG. 3G

FIG. 3H

| Perform feature extraction on a compressed image, to obtain a compression feature map of the compressed image | 101 |

| Perform reconstruction on the compression feature map, to obtain a reconstruction feature map of the compressed image | 102 |

| Perform QF prediction on the compression feature map, to obtain a QF of the compressed image | 103 |

| Perform denoising on the reconstruction feature map based on the QF, to obtain a denoised compressed image | 104 |

| Perform high-resolution image reconstruction on the denoised compressed image, to obtain a high-resolution image | 105 |

FIG. 4

FIG. 5

FIG. 6

FIG. 7

FIG. 8

## INTERNATIONAL SEARCH REPORT

| International application No. |
| --- |
| **PCT/CN2024/087137** |

**A.    CLASSIFICATION OF SUBJECT MATTER**

G06T9/00(2006.01)i

According to International Patent Classification (IPC) or to both national classification and IPC

**B.    FIELDS SEARCHED**

Minimum documentation searched (classification system followed by classification symbols)

IPC:G06T

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 压缩, 图像, 特征, 压缩比率, 压缩比例, 压缩系数, 预测, 去噪, 降噪, 重建, compression, ratio, image, feature, prediction, denoising, reconstructing

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 116977453 A (TENCENT TECHNOLOGY (SHENZHEN) CO., LTD.) 31 October 2023 (2023-10-31)<br>claims 1-19 | 1-19 |
| X | CN 114022357 A (BEIJING BAIDU NETCOM SCIENCE AND TECHNOLOGY CO., LTD.) 08 February 2022 (2022-02-08)<br>description, paragraphs [0004]-[0030] | 1-19 |
| A | CN 109191411 A (GUANGZHOU SHIYUAN ELECTRONICS CO., LTD.) 11 January 2019 (2019-01-11)<br>entire document | 1-19 |
| A | US 2019020903 A1 (THE UNIVERSITY OF NORTH CAROLINA AT CHAPEL HILL) 17 January 2019 (2019-01-17)<br>entire document | 1-19 |

☐ Further documents are listed in the continuation of Box C.      ☑ See patent family annex.

| | |
| --- | --- |
| *    Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **21 June 2024** | **26 June 2024** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/087137**

| Patent document cited in search report | | | Publication date (day/month/year) | Patent family member(s) | Publication date (day/month/year) |
|---|---|---|---|---|---|
| CN | 116977453 | A | 31 October 2023 | None | |
| CN | 114022357 | A | 08 February 2022 | None | |
| CN | 109191411 | A | 11 January 2019 | None | |
| US | 2019020903 | A1 | 17 January 2019 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310674427